# EUROPEAN PATENT APPLICATION

(11) **EP 2 755 100 A1**
(43) Date of publication of application: **16.07.2014**
(21) Application number: 12829297.6
(22) Date of filing: 23.07.2012
(51) Int. Cl.: G05D 1/02, B60L 11/18, B60M 7/00

(54) **DELIVERY VEHICLE SYSTEM AND CHARGE METHOD FOR DELIVERY VEHICLE**

(30) Priority: 06.09.2011 JP 2011193717
(71) Applicant: Murata Machinery, Ltd., Kyoto-shi, Kyoto 601-8326 (JP)
(72) Inventor: HAYASHI Takao, Inuyama-shi Aichi 484-8502 (JP)
(74) Representative: Stöckeler, Ferdinand
(86) International application number: PCT/JP2012/068577
(87) International publication number: WO 2013/035448

(57) **Abstract**

In a system of charging a transport vehicle electric storage device immediately, transport vehicles under control of a ground controller and travelling by an electric storage device as a power source travel along a predetermined travelling route. Chargers respectively having a rectifier rectifying alternating current into direct current, an electric storage device in the charger charged by the rectifier, and a charging coupler charging the electric storage device in the transport vehicle are disposed in locations along the travelling route. The vehicle includes means for reporting a position and residual capacity of the electric storage device to the ground controller, and the ground controller includes a charging management unit selecting a transport vehicle in accordance with the residual capacities of the electric storage devices in the transport vehicles and positions of the transport vehicles, selecting and specifying a charging coupler for the selected vehicle, and controlling so that the selected transport vehicle stops and charges at the specified charging coupler.

## Description

### BACKGROUND OF THE INVENTION

### 1. Field of the Invention

The present invention relates to a system of transport vehicles and to charging transport vehicles, and more specifically relates to charging to transport vehicles in a system where the transport vehicles travel in use of an electric storage device.

### 2. Description of the Related Art

A rechargeable secondary battery has been mounted on an overhead travelling vehicle, a rail-guided vehicle or an automated transport vehicle as an on-vehicle power source. Regarding this aspect, JPH05-207611A proposes that a battery of an overhead travelling vehicle is exchanged by a battery exchanger. For a transport vehicle system using a secondary battery, it is necessary not only to manage the residual capacity of an electric storage device, but also to minimize the drop in operation efficiency of transport vehicles by performing charging in a short time.

Patent Literature 1: JPH05-207611A

### SUMMARY OF THE INVENTION

It is an object of the present invention to provide a system that may charge an electric storage device of a transport vehicle in a short time without an excessive facility.

A transport vehicle system of the present invention makes a plurality of transport vehicles travel under control of a ground controller with electric storage devices in the transport vehicles as power source along a predetermined travelling route,
the system comprises:
chargers provided with rectifiers for rectifying alternate current into direct current, electric storage devices in the chargers charged by the rectifiers, and charging couplers for charging the electric storage devices in the transport vehicles are disposed in a plurality of locations along the travelling route;
the transport vehicles include communication units that report positions of the transport vehicles and residual capacities of the electric storage devices in the transport vehicles to the ground controller; and
the ground controller includes a charging management unit that selects a transport vehicle in need of charging in accordance with the residual capacities of the electric storage devices in the transport vehicles and the positions of the transport vehicles, selects and specifies a charging coupler for the selected transport vehicle, and controls so that the selected transport vehicle stops at the specified charging coupler and charges.

The charging method for transport vehicles according to the present invention makes a plurality of transport vehicles travel under control of a ground controller, with electric storage devices in the transport vehicles as power source, along a predetermined travelling route,
the system further includes chargers provided with rectifiers for rectifying alternate current into direct current, electric storage devices in the chargers charged by the rectifiers, and charging couplers for charging the electric storage devices in the transport vehicles, wherein the chargers are disposed in a plurality of locations along the travelling route,
the method carries out:
a step for making the transport vehicles report positions of the transport vehicles and residual capacities of the electric storage devices in the transport vehicles to the ground controller via communication units in the transport vehicles;
a step for making the ground controller select a transport vehicle in need of charging in accordance with the residual capacities of the transport electric storage devices in the transport vehicles and the positions of the transport vehicles, and select and specify a charging coupler to the selected transport vehicle via a communication unit; and
a step for making the selected transport vehicle stop at the specified charging coupler and charge an electric storage device from an electric storage device in a charger via the specified charging coupler. In this specification, descriptions on the transport vehicle system may directly be applied to the charging method for the transport vehicles.

In the present invention, the electric storage devices in the transport vehicles are not charged directly from the rectifiers, but via the electric storage devices in the chargers. Hence the electric storage devices in the transport vehicles may be quickly charged with large current from the electric storage devices in the chargers via the charging couplers. Since the downtime due to charging is approximately in inverse proportion to the charging current, the downtime of the transport vehicles due to charging may be decreased by the electric storage devices in the chargers, and operation efficiency of the transport vehicles is improved. The wiring to the rectifiers and the power source to the rectifier may have a small capacity, and therefore, it is not necessary to dispose a power supply and wiring for large current in the ground space. Further, the chargers are disposed in a plurality of locations along the travelling route, so as to select and specify a charging coupler for charging in accordance with the position of the transport vehicle and the residual capacity of the electric storage device in the transport vehicle. This ensures all transport vehicles to travel with sufficient residual capacities in the electric storage devices in the transport vehicles. The electric storage devices in the transport vehicles and the electric storage devices in the chargers may be secondary batteries, such as lithium ion batteries or electric double layer capacitors, for example.

It is preferable that the charging couplers are disposed at transfer points comprising load ports or a buffers. By this configuration, transport vehicles may be charged while the transport vehicle is stopping at a stopping point, such as a load port, and therefore, the vehicle downtime due to charging is further decreased. Positions appropriate for disposing the charging coupler, other than the transfer points, are before and after the transfer point, and a standby position where the transport vehicle stops and stands by.

It is preferable that a plurality of charging couplers are connected to one electric storage device in a charger in parallel along the travelling route, and that he charging management unit makes a plurality of overhead travelling vehicles stop simultaneously at the plurality of charging couplers connected in parallel and simultaneously charge. If a transport vehicle stops to be charged, the travelling route is blocked during this time. Therefore if the plurality of transport vehicles are stopped in adjacent positions and are simultaneously charged, time when the travelling route is blocked due to charging may be decreased. The transport vehicles are charged via the electric storage device in the charger, therefore even if a plurality of transport vehicles are simultaneously charged, charging current does not become insufficient, and one electric storage device in the charger may be shared by a plurality of charging couplers.

It is particularly preferable that the transport vehicles are overhead travelling vehicles travelling along a travelling rail disposed in a ceiling space, and the rectifiers and the electric storage devices in the chargers are disposed in a ground space. Inefficiency arises when an alternate current wiring is laid along the ceiling space and the electric storage device in the charger, which is a heavy load, is provided therein. If the rectifier and the electric storage device in the charger are disposed in the ground space, on the other hand, wiring to an equipment, where goods are delivered, may be used as an alternate current source to the rectifier, and direct current wiring may be laid from the ground to the travelling rail so that a plurality of charging couplers may be wired along the travelling rail.

It is preferable that the ground controller determines the charging amount via the specified charging coupler in accordance with a frequency of transport request generation. Then, if many transportation requests are generated, the operation efficiency of the transport vehicles is increased by decreasing the charging amount that is charged each time, and if few transportation requests are generated, a drop in transport efficiency due to charging may be prevented by increasing the charging amount that is charged each time. It is preferable that the ground controller determines the charging amount via the specified charging coupler in accordance with a frequency of generation of instructions for travelling via the specified charging coupler. Then, if there are many travelling instructions via the charging coupler used for the charging, interrupting the traveling of other vehicles may be prevented by decreasing the charging amount that is charged each time. The charging amount may be determined in accordance with both the generation frequency of transportation requests and the generation frequency of the travelling instruction via the charging coupler used for the charging.

### BRIEF DESCRIPTION OF THE DRAWINGS

FIG. 1 is a plan view depicting a layout of an overhead travelling vehicle system of an embodiment;
FIG. 2 is a side view depicting an overhead travelling vehicle and an equipment according to the embodiment;
FIG. 3 is a block diagram depicting a charger and a peripheral thereof according to the embodiment;
FIG. 4 is a block diagram depicting a transport vehicle and a peripheral thereof according to the embodiment;
FIG. 5 is a block diagram depicting a ground controller according to the embodiment; and
FIG. 6 is a flow chart depicting a charging control algorithm according to the embodiment.

### DESCRIPTION OF THE PREFERRED EMBODIMENTS

A preferred embodiment of the present invention will now be described. The scope of the present invention should be determined according to the understanding of those skilled in the art based on the Claims with reference to the content of the description and well known art in this field.

### Embodiments

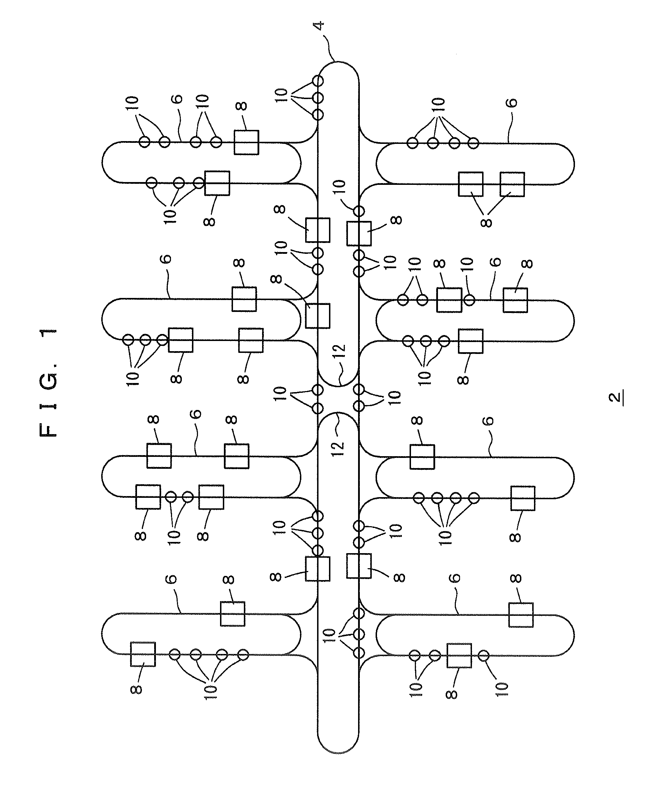

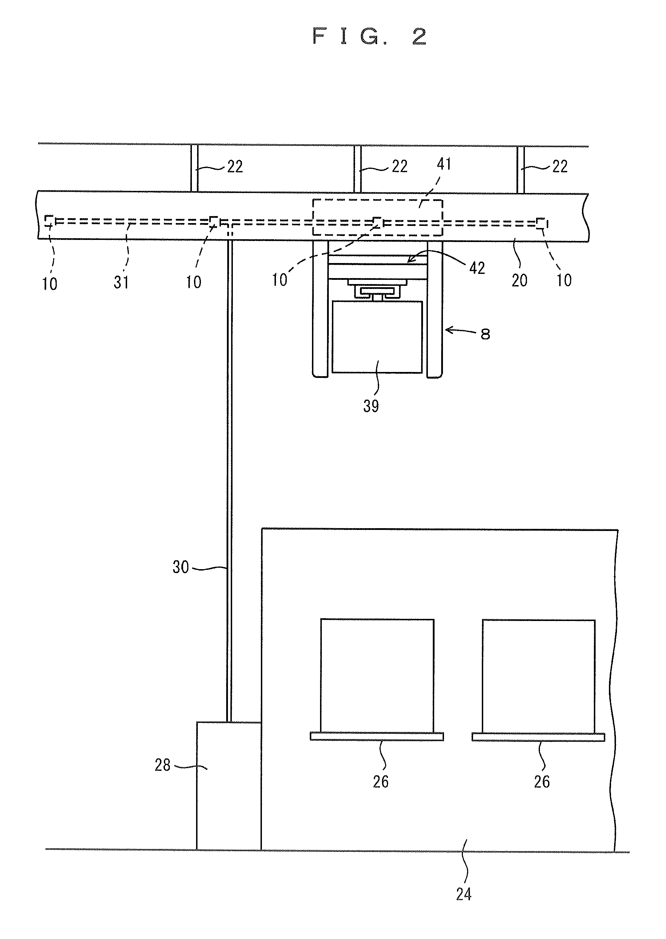

FIG. 1 to FIG. 6 show an overhead travelling vehicle system 2 of an embodiment, and a rail-guided vehicle system that travels on the ground, or an automated transport vehicle system or the like may be used instead of the overhead travelling vehicle system. In each drawing, 4 indicates an inter-bay route connecting a plurality of intra-bay routes 6, and a plurality of equipment 24, depicted in FIG. 2, are disposed along the intra-bay route 6. 8 indicates an overhead travelling vehicle that travels in a ceiling space along the travelling rail 20 in FIG. 2, and 10 indicates charging couplers disposed along the travelling route, and the charging couplers are disposed at load ports and at least at one of the positions before and after the load ports, at positions facing buffers for temporarily storing goods and at least at one of the positions before and after the buffers, and at standby positions of the overhead travelling vehicles 8, for example. Reference numeral 12 indicates short cut routes disposed in the inter-bay route 4, and these routes may be omitted.

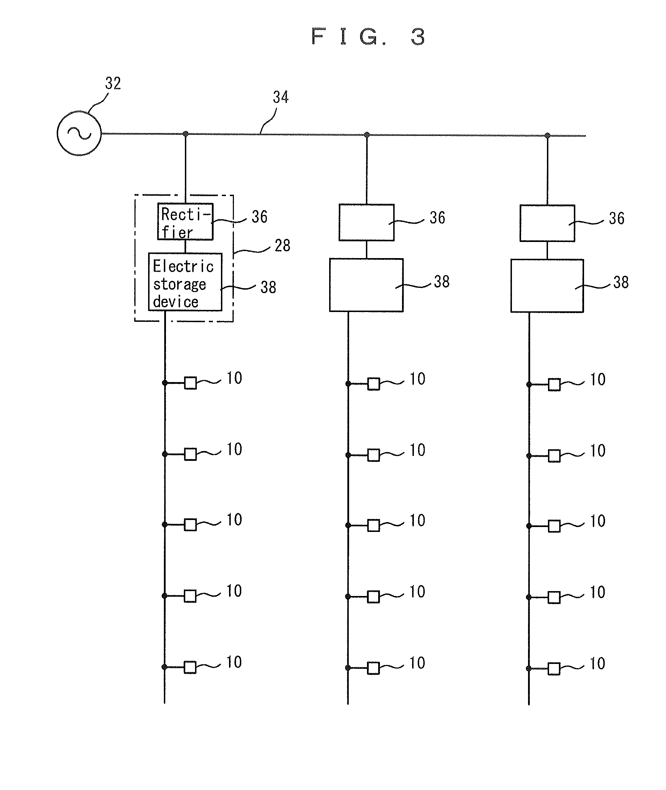

FIG. 2 shows the overhead travelling vehicle 8 which is charged by the charging coupler 10 directly above the load port 26. 20 indicates the travelling rail, which is suspended by supports 22 from the ceiling of a cleanroom or the like, and 24 indicates equipment, such as semiconductor manufacturing equipment (this may be equipment for a flat panel display) disposed in the ground space, and the equipment includes one or a plurality of load ports 26. 28 indicate a charger main unit, and is constituted by a rectifier 36 and an electric storage device 38 illustrated in FIG. 3. The electric storage device 38 may be a secondary battery such as a lithium ion battery or an electric double layer capacitor. DC wiring 30 is laid from the charger main unit 28 to the travelling rail 20, and DC wiring 31 is laid along the travelling rail 20 so as to supply DC power to the plurality of charging couplers 10. The plurality of charging couplers 10 are connected in parallel with the DC wiring 30, and, for example, the travelling rail 20 also functions as a ground wire. At least one of the pluralities of charging couplers 10 is disposed directly above the load port 26, where the overhead travelling vehicle 8 stops and transfers a good 39 to or from the load port 26, and is charged at the same time with transfer. The charging coupler 10 is disposed at a plurality of locations at intervals of the length of the overhead traveling vehicle 8. This allows, for example, a plurality of overhead travelling vehicles 8 to be charged simultaneously via adjacent charging couplers. For example, when one overhead travelling vehicle 8 is charged, if another overhead travelling vehicle 8, travelling at least either before or after the overhead travelling vehicle 8, is made to charge simultaneously, then occasions when an overhead travelling vehicle 8 stops for charging and blocks the travelling route may be decreased.

As described above, the charging coupler 10 is disposed directly above the load port 26, but may also be disposed above a buffer (not illustrated), at positions before or after the buffer, and at standby positions, for example. Two to several charging coupler groups (a "charging coupler group" is a plurality of charging couplers 10 connected to one charger main unit 28) are disposed for each intra-bay route 6, for example, and several charging coupler groups are disposed in the inter-bay route 4. Thereby an overhead travelling vehicle 8 may reach a nearby charging coupler 10 if it travels several tens of meters to 100 meters, for example.

FIG. 3 shows the charger and the peripheral thereof. Reference numeral 32 indicates an AC power supply, which is also the power supply of the equipment. 34 indicates the AC wiring, and the rectifier 36 converts alternate current into direct current. The electric storage device 38 stores the direct current and supplies the DC power to the charging couplers 10. Since this configuration uses the AC power supply of the equipment, and the rectifier 36 and the electric storage device 38 are disposed in the ground space, it is not necessary to support the charger in the ceiling space using a travelling rail or the like.

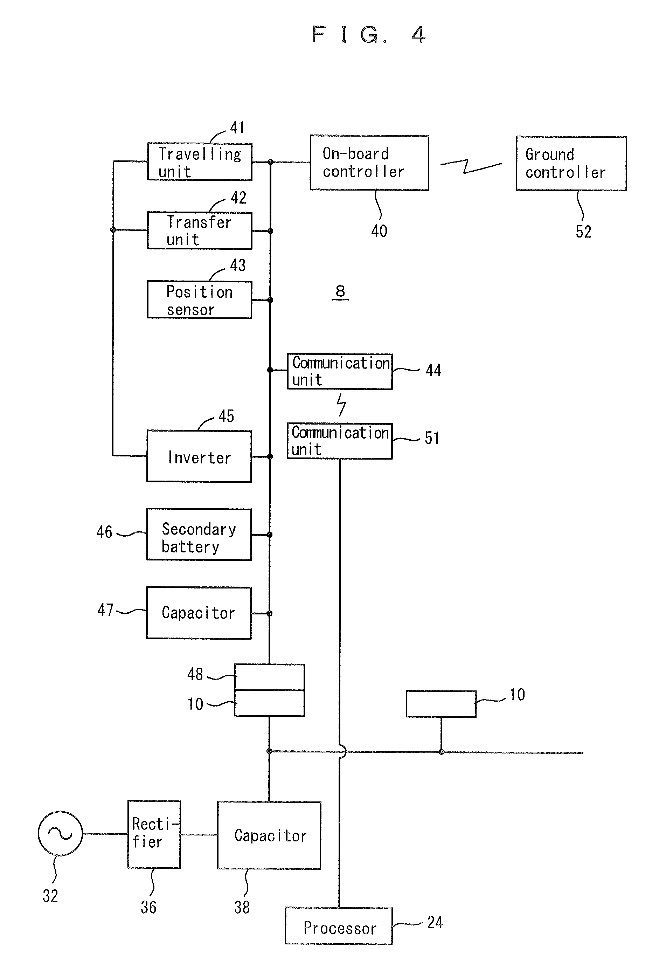

FIG. 4 shows a configuration of the overhead travelling vehicle 8, where 41 indicates a travelling unit constituted by a travelling motor and travelling wheels, and 42 indicates a transfer unit constituted, for example, by a hoisting mechanism of a hoistable frame and a transverse sliding unit for moving the hoisting mechanism sideways with respect to the travelling direction. A position sensor 43 measures a position of an overhead travelling vehicle 8, a communication unit 44 communicates with a communication unit 51 in the equipment 24, and exchanges a signal for transferring a good and a signal for charge. An on-board controller 40 communicates with a ground controller 52, and reports on a current position, velocity and state of the overhead travelling vehicle 8, and on the residual capacity of the secondary battery 46 and the capacitor 47, and receives instructions on travelling or the like from the ground controller 52.

An inverter 45 converts the output of the secondary battery 46 and the capacitor 47 into alternate current, and supplies the alternate current to a travelling motor of the travelling unit 41 and a motor of the transfer unit 42, and the secondary battery 46 and the capacitor 47 receive DC power from the coupler 10 in the charger via the coupler 48 in transport vehicle. When the overhead travelling vehicle 8 is accelerating and the liftable frame is ascending, power is supplied from both the capacitor 47 and the secondary battery 46, and when power consumption is low, such as during constant speed travelling, power is supplied only from the secondary battery 46. Energy regenerated by deceleration of the overhead travelling vehicle 8 and descending of the liftable frame is stored in the capacitor 47 and the secondary battery 46. The residual capacity of the capacitor 47 is made to return to a predetermined value in each cycle from the start of travelling of the overhead travelling vehicle 8 to the completion of transfer, so that the net power consumption in each cycle is supplied from the secondary battery 46. If the capacitor 47 is disposed, peak current discharged from the second battery 46 may be decreased, and discharge current from the secondary battery 46 may be equalized, hence a small capacity secondary battery 46 may be used, and battery life of the secondary battery 46 may be extended. The capacitor 47 need not be disposed, or only the capacitor 47 may be disposed without the secondary battery 46.

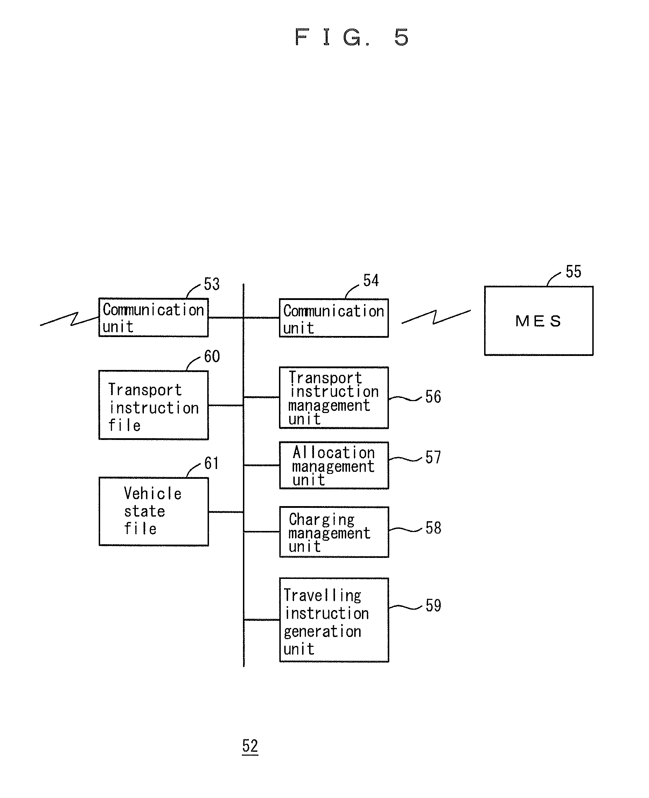

FIG. 5 shows a configuration of a ground controller 52. 53 indicates a communication unit which communicates with the overhead travelling vehicle, while 54 indicates a communication unit which communicates with a manufacturing execution system 55, and receives a request on transport and reports the transport result. A transport instruction management unit 56 creates a transport instruction according to a request from the manufacturing execution system 55, and manages the execution state thereof. A vehicle allocation unit 57 generates allocation instructions to make empty vehicles run so that a predetermined number of empty vehicles are in each intra-bay route. A charging management unit 58 manages the residual capacity for the secondary battery and capacitor of each overhead travelling vehicle, and instructs the vehicle to be charged with specifying a position of the charging coupler if the residual capacity drops to a predetermined value or lower. The residual capacity may be managed only for the secondary battery, since the residual capacity of the capacitor is low except when acceleration starts. If no transport instruction or allocation instruction is assigned to the overhead travelling vehicle, the travelling vehicle may be charged at an arbitrary position via the charging coupler. If a transport instruction or allocation instruction is assigned, the charging management unit 58 determines a position of the charging coupler within a specified travelling route. To specify the position of the charging coupler, coordinates along the travelling route or an ID of the charging coupler, for example, may be specified. The threshold of the residual capacitance of the secondary battery (or capacitor) to be charged is set to low during execution of the transport instruction, otherwise it is set to high, so that the overhead travelling vehicle may be charged before executing the transport instruction.

A travelling instruction generation unit 59 generates travelling instructions so that the overhead travelling vehicles execute transport instructions, allocation instructions, charging instructions or the like. The travelling instructions specify the target positions and the target velocities after a predetermined time interval, and the instructions are generated with the time interval, for example. A transport instruction file 60 stores transport instructions and execution results thereof, and a vehicle state file 61 stores the positions, velocities and states of vehicles and residual capacities of the secondary batteries and the capacitors.

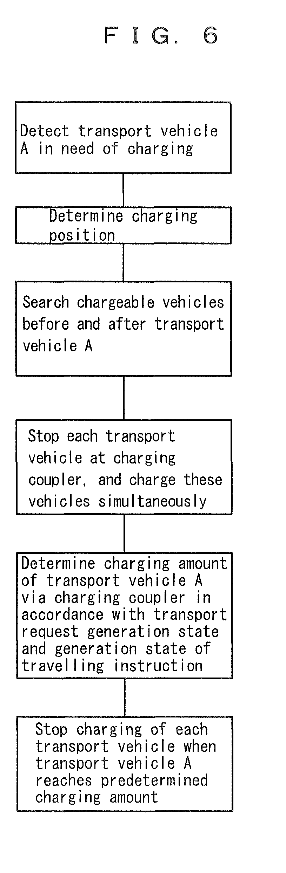

FIG. 6 shows a charging algorithm. The charging management unit detects a transport vehicle that needs charging, and selects and specifies an charging coupler as the charging position in accordance with the travelling route, the current position of the transport vehicle, and the residual capacity of the secondary battery, etc. The transport vehicle that needs charging is called "transport vehicle A". When an overhead travelling vehicle is being charged, the travelling route is blocked during charge. Therefore, chargeable overhead travelling vehicles before and after the overhead travelling vehicle to be charged are searched. "Chargeable" means that the secondary battery or the like is not fully charged, and a transport instruction with high priority is not in execution. Then, the charging management unit stops the overhead travelling vehicle A that needs charging, and stops the chargeable overhead travelling vehicles before and after the overhead travelling vehicle A in the positions of adjacent charging couplers, and makes these vehicles simultaneously charged.

The charging management unit of the ground controller determines the charging amount for the transport vehicle A, that is the percentage of the charge when a fully charged state is 100%. The amount is determined in accordance with both the generation frequency of transport requests from the manufacturing execution system to the ground controller and the generation frequency of travelling instructions via the charging coupler used for charging. However, it is not always necessary to use both the generation frequency of transport requests and the generation frequency of the travelling instructions. The charging amount may be determined in accordance with one of the generation frequencies. The charging amount is increased when the number of transport requests is higher and when the number of travelling instructions via the target charging coupler is higher. The charging amount is decreased when these numbers are lower. It may be determined to fully charge the transport vehicle when the generation frequency of transport requests is low, and a number of travelling instructions via the target charging coupler is low.

The generation frequency of transport requests may be determined with a moving average of the frequency of transport request generation per unit time, or with a predictive value of the frequency of transport request generation per unit time in the future based on the moving average. If the generation of transport requests has some regularity, such as periodical changes, then a predictive value determined based on the regularity may be used. Further, the number of generated transport requests may be a moving average of transport instructions assigned by the ground controller per unit time, or a predictive value thereof. The generation frequency of transport requests indicates the level of the transport load of the entire transport system. The number of generation of transport requests is a base for the generation frequency of transport requests. The number of generation of transport requests is one generated in the entire transport system, ignoring loading positions and unloading positions, for example.

The generation frequency of travelling instructions via the charging coupler used for the charging indicates how the travelling route is blocked due to the charge and how many other transport vehicles are forced to wait. The travelling instruction is an instruction to a transport vehicle that involves travelling, and includes not only a transport instruction but also an allocation instruction, a charging instruction, and an instruction to go out of a travelling route. However, only transport instructions, out of these instructions, may be considered.

The charging management unit determines x = aα + bβ (a and b are positive constants), where α is a number of generation of transport instructions in the entire transport system, and β is a number of times of generation of a travelling instructions via the charging coupler used for charging. The charging management unit decreases the charging amount when the value x is large and increases the charging amount when the value x is small. For the number of generation α of transport requests in the entire transport system, a predictive value is important so as to quickly execute the transport requests generated in the future. For the number of generation β of transport requests via the charging coupler used for charging, the current value is more important than the predictive value so that the travelling of other vehicles is not interrupted.

If the transport vehicle A of which residual capacity is the lowest is charged to a predetermined capacity, the charging management unit of the ground controller instructs transport vehicles being charged via adjacent charging couplers to stop charging. The period that the travelling route is blocked may be decreased if the plurality of overhead travelling vehicles stop charging all at once. The charging is performed using power of the electric storage device 38, hence a plurality of overhead travelling vehicles may be charged simultaneously. Since the charging coupler is disposed in a position directly above the load port, an overhead travelling vehicle, which transfers a good with a load port where the charging coupler is disposed, is charged, unless the overhead travelling vehicle is fully charged. In this case as well, other overhead travelling vehicles are also stopped at adjacent charging couplers and are charged.

According to the embodiment, the following advantageous effects may be obtained.
(1) Charging with large current in a short time is possible, since the overhead travelling vehicle 8 is charged from the electric storage device 38. The downtime due to charging is approximately in inverse proportion to the charging current, hence charging with large current improves the operation efficiency of the overhead travelling vehicles 8.
(2) Wiring is easy since the AC power supply 32 for the equipment is used as the power source to the electric storage device 38. By charging the overhead travelling vehicle 8 from the electric storage device 38 in a short time, and normally charging the electric storage device 38 from the AC power supply 32, the capacity of the ground wiring required for charging may be decreased.
(3) A plurality of overhead travelling vehicles may be charged simultaneously, since a plurality of charging couplers 10 are connected to one electric storage device 38 in parallel. This decreases the time of blocking the travelling route due to charging.
(4) The electric storage device 38 and the rectifier 36 are disposed in the ground space and need not be supported in the ceiling space.
(5) By installing two to several charging coupler groups in each intra-bay route 6 and installing several charging coupler groups in the inter-bay route 4 as well, the overhead travelling vehicle may be charged at a 100 meters or less travelling distance. Further, the charging management unit 58 monitors the positions of the overhead travelling vehicles and the residual capacity of the secondary battery or the like, hence no overhead travelling vehicles run out of battery power.
(6) The charging coupler 10 is disposed directly above the load port 26, and therefore, the period for transferring goods may be used for charging.
(7) These features as a whole decrease the period of the overhead travelling vehicles consumed by charging. The operation efficiency of the overhead travelling vehicles is increased.
(8) The residual capacity level to be reached by charging is determined in accordance with the generation frequency of transport requests and the generation frequency of travelling instructions via the charging coupler. Therefore, if the generation frequency of transports request is high, the charge amount for each charge is decreased to improve the operation efficiency of the transport vehicles. If the number of travelling instructions via the charging coupler is high, the charging amount for each charge is decreased so that the travelling of other transport vehicles is not interrupted. If the generation frequency of transport requests is low and the number of travelling instructions via the charging coupler is small, the charging amount for each charge is increased so that the transport vehicles are charged enough for the next busy period while not interfering with the travelling of other transport vehicles.

### EXPLANATION OF REFERENCE NUMERALS

- 2: overhead travelling vehicle system
- 4: inter-bay route
- 6: intra-bay route
- 8: overhead travelling vehicle
- 10: charging coupler
- 12: short cut route
- 20: travelling rail
- 22: support
- 24: equipment
- 26: load port
- 28: charging device main unit
- 30, 31: DC power wiring
- 32: AC power supply
- 34: AC wiring
- 36: rectifier
- 38: electric storage device
- 39: good
- 40: on-board controller
- 41: travelling unit
- 42: transfer unit
- 43: position sensor
- 44: communication unit
- 45: inverter
- 46: secondary battery
- 47: capacitor
- 48: coupler in the transport vehicle
- 51: communication unit
- 52: ground controller
- 53, 54: communication unit
- 55: manufacturing execution system
- 56: transport instruction management unit
- 57: vehicle allocation unit
- 58: charging management unit
- 59: travelling instruction generation unit
- 60: transport instruction file
- 61: vehicle state file

## Claims

1. A transport vehicle system for making a plurality of transport vehicles travel under control of a ground controller with electric storage devices in the transport vehicles as power source along a predetermined travelling route,
the system being **characterized in that**
chargers provided with rectifiers for rectifying alternate current into direct current, electric storage devices in the chargers charged by the rectifiers, and charging couplers for charging the electric storage devices in the transport vehicles are disposed in a plurality of locations along the travelling route;
the transport vehicles include communication units that report positions of the transport vehicles and residual capacities of the electric storage devices in the transport vehicles to the ground controller; and
the ground controller includes a charging management unit that selects a transport vehicle in need of charging in accordance with the residual capacities of the electric storage devices in the transport vehicles and the positions of the transport vehicles, selects and specifies a charging coupler for the selected transport vehicle, and controls so that the selected transport vehicle stops at the specified charging coupler and charges.

2. The transport vehicle system according to Claim 1, **characterized in that**
the charging couplers are disposed at transfer points comprising load ports or buffers.

3. The transport vehicle system according to Claim 1 or Claim 2, **characterized in that**
a plurality of charging couplers are connected to one electric storage device in a charger in parallel along the travelling route, and
the charging management unit makes a plurality of overhead travelling vehicles stop simultaneously at the plurality of charging couplers connected in parallel and simultaneously charge.

4. The transport vehicle system according to Claim 3, **characterized in that**
the transport vehicles are overhead travelling vehicles travelling along a travelling rail disposed in a ceiling space, and the rectifiers and the electric storage devices in the chargers are disposed on a ground.

5. The transport vehicle system according to any one of Claims 1 to 4, **characterized in that**
the ground controller determines the charging amount via the specified charging coupler in accordance with a frequency of transport request generation.

6. The transport vehicle system according to any one of Claims 1 to 5, **characterized in that**
the ground controller determines the charging amount via the specified charging coupler in accordance with a frequency of generation of instructions for travelling via the specified charging coupler.

7. A charging method for transport vehicles in a system for making a plurality of transport vehicles travel under control of a ground controller, with electric storage devices in the transport vehicles as power source, along a predetermined travelling route,
the system further including chargers provided with rectifiers for rectifying alternate current into direct current, electric storage devices in the chargers charged by the rectifiers, and charging couplers for charging the electric storage devices in the transport vehicles, wherein the chargers are disposed in a plurality of locations along the travelling route,
the method being **characterized in** carrying out:
a step for making the transport vehicles report positions of the transport vehicles and residual capacities of the electric storage devices in the transport vehicles to the ground controller via communication units in the transport vehicles;
a step for making the ground controller select a transport vehicle in need of charging in accordance with the residual capacities of the transport electric storage devices in the transport vehicles and the positions of the transport vehicles, and select and specify a charging coupler to the selected transport vehicle via a communication unit; and
a step for making the selected transport vehicle stop at the specified charging coupler and charge an electric storage device from an electric storage device in a charger via the specified charging coupler.
